# EUROPEAN PATENT APPLICATION

(11) **EP 3 007 388 A1**
(43) Date of publication of application: **13.04.2016**
(21) Application number: 13885592.9
(22) Date of filing: 31.05.2013
(51) Int. Cl.: H04L 12/58

(54) **TERMINAL AND INFORMATION INTERACTION METHOD**

(71) Applicant: Dongguan Yulong Telecommunication Tech Co. Ltd., Guangdong 523808 (CN); Yulong Computer Telecommunication Scientific (Shenzhen) Co. Ltd., Shenzhen, Guangdong 518057 (CN)
(72) Inventor: LIU, Jiangtao, Shenzhen Guangdong 518057 (CN); GUO, Deying, Shenzhen Guangdong 518057 (CN); GUO, Xiaotao, Shenzhen Guangdong 518057 (CN); CAI, Sheng, Shenzhen Guangdong 518057 (CN)
(74) Representative: DREISS Patentanwälte PartG mbB
(86) International application number: PCT/CN2013/076606
(87) International publication number: WO 2014/190559

(57) **Abstract**

The present invention provides a terminal and an information interaction method. The terminal comprises an identification generation unit and a notification unit. The identification generation unit generates a request message identification when receiving a request sent out by any group member of a social networking service group, and controls a display unit of the terminal to display the request message identification at a preset position of a page of the social networking service group. The notification unit receives a response operation performed by another group member on the request message identification, and notifies the any group member of a response message.

## Description

### Field of the Invention

The present invention relates to the technical field of mobile communications, and specifically relates to a terminal and an information interaction method.

### Background of the Invention

In present social applications, when the group master or a certain member in a social networking service group wants to call (or seek) another member in the group or query a certain problem, it needs to send a message (e.g. Is Zhao Min in? Who knows this thing?). If the called (or sought) member sees the message or another member in the group knows the solution of the question, information is answered under the message, and each piece of answered information is displayed under the message.

The present information interaction scheme inevitably has the following problems: when the group master or a certain member in the social networking service group sends a message for calling (or seeking) another member in the group or querying a certain problem, the called member may not be just in, or the member who knows how to do something just does not see the message, and then the message is flooded along with the increase of the chatting content of others, so that the problem can not be solved more quickly and more effectively. Thus, how the message sent by a group member can not be flooded and information interaction can be effectively performed become technical problems to be urgently solved.

### Summary of the Invention

The present invention proposes a new information interaction scheme just based on the above background art, enabling a message sent out by a group member not to be flooded so that information interaction can be performed more effectively.

According to an aspect of the present invention, provided is a terminal, including: an identification generation unit, for generating a request message identification when receiving a request sent out by any group member of a social networking service group, and controlling a display unit of the terminal to display the request message identification at a preset position of a page of the social networking service group; and a notification unit, for receiving a response operation performed by another group member on the request message identification, and notifying the any group member of a response message.

In this technical scheme, when the group member sends out a request, a request message identification with a prompt effect can be generated according to the request, so that another group member or a specific group member can see the request sent out by the group member. In order that all group members can obviously notice the request message identification, the request message identification can be displayed at a conspicuous position of a page of the social networking service group, other group members can reply or perform other operations on the request message identification, e.g. top-up; and when the other group members respond to the request message identification, the response can be fed back to the requester. In such an interaction mode, no matter how many pieces of messages are replied to the request, the request message identification is not flooded, thus solving the problem that information communication is not timely because the message sent out by the requester in the social networking service group is flooded at present.

In the above technical scheme, preferably, the identification generation unit is further used for dynamically changing the display of the request message identification according to the number of response operations of the other group members.

The display state of the request message identification is changeable, and the display of the request message identification can be changed according to the response of the other group members to the request message identification, so that the response state of the request message identification responded by the group members can be reflected from the request message identification.

In any above technical scheme, preferably, the identification generation unit is used for expanding the display of the request message identification or changing the color display of the request message identification along with the increase of the response operations.

If the response operations are increased, it shows that the request message is relatively hot or is a topic of common interest, and the display of the request message identification can be expanded or the base color of the identification can be changed to indicate the change of the response state.

In any above technical scheme, preferably, the terminal may further include: a configuration unit, for receiving setting data of display time limit of the request message identification; and the identification generation unit is further used for controlling the display of the request message identification within the display time limit according to the setting data.

When there are many requesters, a plurality of request message identifications may be displayed; as time goes on, more request message identifications may be displayed in the page of the social networking service group; however, the display page is limited; and in order that the display interface is relatively concise, the display time limit of each request message identification may be set, and the request message identification will not be displayed after the display time limit.

In any above technical scheme, preferably, the identification generation unit includes a display control subunit, used for, when the request sent out by the any group member is the one aiming at a specified group member, if the received response operation is the one of the specified group member, or when the request sent out by the any group member is a questioning request, if the received response message is the correct answer to the questioning request, canceling the display of the request message identification.

Setting the display time limit of the request message identification is a mode, besides, the display of the request message identification can also be canceled in other modes, e.g. for the request aiming at the specified group member, if the specified group member has responded to the request message identification, the request message identification does not need to be displayed again. If the request is a questioning request and the questioning request is accurately answered, the request message identification does not need to be displayed likewise, and the display of these request message identifications which do not need to be displayed can be canceled.

In any above technical scheme, preferably, the identification generation unit is further used for, when a plurality of group members send out requests, controlling the display unit to display the request message identifications generated on the basis of the requests of the plurality of group members according to the authority priorities of the group members.

When there are many requests, the request message identifications can be displayed according to the priorities of the group members sending out the requests, e.g. the request message identification corresponding to the request sent out by the group member with a high priority is displayed at the foremost end or the leftmost end; or during displaying, the request message identifications of different colors are displayed according to the sequence of the priorities, namely each request message identification is displayed according to the color sequence, e.g. the identification corresponding to the highest priority is red in color, and the identification corresponding to the higher priority is pink in color.

In any above technical scheme, preferably, the identification generation unit is further used for, when a plurality of group members send out requests, controlling the display unit to display the request message identifications generated on the basis of the requests of the plurality of group members according to the number of response operations performed by other group members on each request message identification.

The request message identifications can be displayed according to the number of response operations performed by each group member on the request message identifications besides according to the priorities of the group members. For example, the request message identification with a large response operation number is displayed at the foremost end or displayed with largest area.

In any above technical scheme, preferably, the terminal may further include a calculation unit, used for counting the total number of response operations performed by each group member on all the request message identifications and determining the priority of each group member according to the total number of response operations.

The priority of the group member can be set by the group master or determined according to the joining time, or determined according to the response degree of the group member to the request message, e.g. the total response number of each group member to the request message within three months is counted; if the total response number is relatively large, the group member is considered to be relatively active, the priority is highest, and the priority of the request sent out by the group member is also highest.

In any above technical scheme, preferably, the identification generation unit is further used for controlling the display unit to display the request message identification at the top end of the page of the social networking service group.

In any above technical scheme, preferably, the request message identification includes a pattern added with character information, and the pattern includes at least one of a bubble shape, a water drop shape and a balloon shape.

According to another aspect of the present invention, further provided is an information interaction method, including: when receiving a request sent out by any group member of a social networking service group, generating a request message identification and displaying the request message identification at a preset position of a page of the social networking service group; and receiving a response operation performed by another group member on the request message identification, and notifying the any group member of a response message.

In this technical scheme, when the group member sends out a request, a request message identification with a prompt effect can be generated according to the request, so that another group member or a specific group member can see the request sent out by the group member. In order that all group members can obviously notice the request message identification, the request message identification can be displayed at a conspicuous position of a page of the social networking service group, other group members can reply or perform other operations on the request message identification, e.g. top-up; and when the other group members respond to the request message identification, the response can be fed back to the requester. In such an interaction mode, no matter how many pieces of messages are replied to the request, the request message identification is not flooded, thus solving the problem that information communication is not timely because the message sent out by the requester in the social networking service group is flooded at present.

In the above technical scheme, preferably, the display of the request message identification is dynamically changed according to the number of response operations of the other group members.

The display state of the request message identification is changeable, and the display of the request message identification can be changed according to the response of the other group members to the request message identification, so that the response state of the request message identification responded by the group members can be reflected from the request message identification.

In any above technical scheme, preferably, the display of the request message identification is expanded or the color display of the request message identification is changed along with the increase of the response operations.

If the response operations are increased, it shows that the request message is relatively hot or is a topic of common interest, and the display of the request message identification can be expanded or the base color of the identification can be changed to indicate the change of the response state.

In any above technical scheme, preferably, setting data of display time limit of the request message identification is received; and the display of the request message identification within the display time limit is controlled according to the setting data.

When there are many requesters, a plurality of request message identifications may be displayed; as time goes on, more request message identifications may be displayed in the page of the social networking service group; however, the display page is limited; and in order that the display interface is relatively concise, the display time limit of each request message identification may be set, and the request message identification will not be displayed after the display time limit.

In any above technical scheme, preferably, when the request sent out by the any group member is the one aiming at a specified group member, if the received response operation is the one of the specified group member, the display of the request message identification is canceled; or when the request sent out by the any group member is a questioning request, if the received response message is the correct answer to the questioning request, the display of the request message identification is canceled.

Setting the display time limit of the request message identification is a mode, besides, the display of the request message identification can also be canceled in other modes, e.g. for the request aiming at the specified group member, if the specified group member has responded to the request message identification, the request message identification does not need to be displayed again. If the request is a questioning request and the questioning request is accurately answered, the request message identification does not need to be displayed likewise, and the display of these request message identifications which do not need to be displayed can be canceled.

In any above technical scheme, preferably, when a plurality of group members send out requests, the request message identifications generated on the basis of the requests of the plurality of group members are displayed according to the authority priorities of the group members.

When there are many requests, the request message identifications can be displayed according to the priorities of the group members sending out the requests, e.g. the request message identification corresponding to the request sent out by the group member with a high priority is displayed at the foremost end or the leftmost end; or during displaying, the request message identifications of different colors are displayed according to the sequence of the priorities, namely each request message identification is displayed according to the color sequence, e.g. the identification corresponding to the highest priority is red in color, and the identification corresponding to the higher priority is pink in color.

In any above technical scheme, preferably, when a plurality of group members send out requests, the request message identifications generated on the basis of the requests of the plurality of group members are displayed according to the number of response operations performed by other group members on each request message identification.

The request message identifications can be displayed according to the number of response operations performed by each group member on the request message identifications besides according to the priorities of the group members. For example, the request message identification with a large response operation number is displayed at the foremost end or displayed with largest area.

In any above technical scheme, preferably, the total number of response operations performed by each group member on all the request message identifications is counted, and the priority of each group member is determined according to the total number of response operations. The priority of the group member can be set by the group master or determined according to the joining time, or determined according to the response degree of the group member to the request message, e.g. the total response number of each group member to the request message within three months is counted; if the total response number is relatively large, the group member is considered to be relatively active, the priority is highest, and the priority of the request sent out by the group member is also highest.

In any above technical scheme, preferably, the request message identification is displayed at the top end of the page of the social networking service group.

In any above technical scheme, preferably, the request message identification includes a pattern added with character information, and the pattern includes at least one of a bubble shape, a water drop shape and a balloon shape.

According to the technical schemes of the present invention, when the group member of the social networking service group sends out a request, the request message identification can be displayed at the conspicuous position of the page of the social networking service group, other group member can perform a response operation on the request message identification and feed back the response message to the requester at the same time, and the display of the request message identification can be canceled only under specific conditions and can not be flooded due to the increase of replied messages, so that the request message can be concerned all the time and the group members can perform effective and rapid information interaction.

### Brief Description of the Drawings

Fig. 1 shows a block diagram of a terminal according to an embodiment of the present invention;
Fig. 2 shows a flow diagram of an information interaction method according to an embodiment of the present invention;
Fig. 3 shows a processing flow diagram indicating that the group master requires all group members to bubble according to an embodiment of the present invention;
Fig. 4 shows a processing flow diagram indicating that a group member sends out a bubble request of seeking a certain group member according to an embodiment of the present invention;
Fig. 5 shows a processing flow diagram indicating that a group member sends out a bubble request of asking a certain group member to answer a question according to an embodiment of the present invention;
Fig. 6 shows a schematic diagram indicating that the group master sends out an all group member bubble request according to an embodiment of the present invention;
Fig. 7 shows a schematic diagram of bubble setting according to an embodiment of the present invention;
Fig. 8 shows a schematic diagram indicating that a plurality of group members send out bubble requests according to an embodiment of the present invention;
Fig. 9 shows a schematic diagram of information interaction that the group master questions a certain group member according to an embodiment of the present invention.

### Detailed Description of the Embodiments

In order that the above purposes, features and advantages of the present invention can be understood more clearly, the present invention will be further described in detail below in combination with the accompanying drawings and specific implementations.

It should be noted that, the embodiments of the present application and the features in the embodiments can be combined with each other without conflicts.

Many specific details are illustrated in the following description for full understanding of the present invention, but the present invention may also be implemented by adopting a second mode different from what's described herein, so the protection scope of the present invention is not limited by the specific embodiments disclosed below.

The present invention can be applied to social applications, e.g. WeChat, MicroBlog, Renren, Kaixin, QQ, Fetion, MSN, youtube, facebook, etc., thus providing a new chatting interaction mode and improving the timeliness and effectiveness of information feedback.

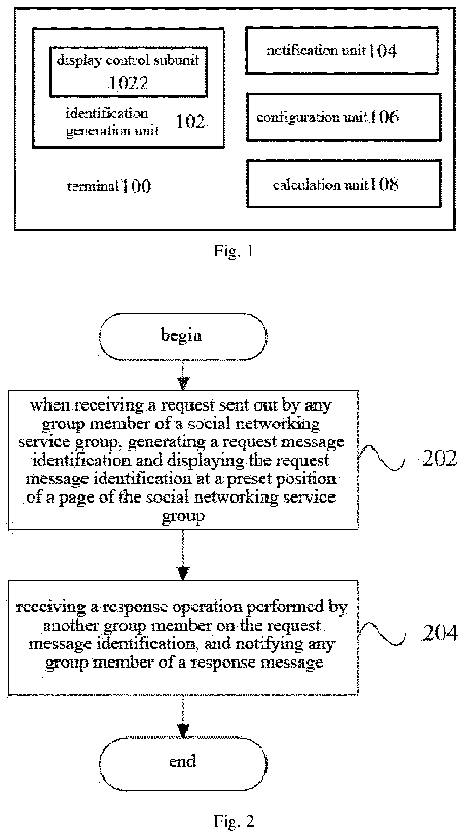

Fig. 1 shows a block diagram of a terminal according to an embodiment of the present invention.

As shown in Fig. 1, the terminal 100 according to the embodiment of the present invention includes: an identification generation unit 102, for generating a request message identification when receiving a request sent out by any group member of a social networking service group, and controlling a display unit of the terminal to display the request message identification at a preset position of a page of the social networking service group; and a notification unit 104, for receiving a response operation performed by another group member on the request message identification, and notifying any group member of a response message.

In this technical scheme, when the group member sends out a request, a request message identification with a prompt effect can be generated according to the request, so that another group member or a specific group member can see the request sent out by the group member. In order that all group members can obviously notice the request message identification, the request message identification can be displayed at a conspicuous position of a page of the social networking service group, other group members can reply or perform other operations on the request message identification, e.g. top-up; and when the other group members respond to the request message identification, the response can be fed back to the requester. In such an interaction mode, no matter how many pieces of messages are replied to the request, the request message identification is not flooded, thus solving the problem that information communication is not timely because the message sent out by the requester in the social networking service group is flooded at present.

In the above technical scheme, preferably, the identification generation unit 102 is further used for dynamically changing the display of the request message identification according to the number of response operations of the other group members.

The display state of the request message identification is changeable, and the display of the request message identification can be changed according to the response of the other group members to the request message identification, so that the response state of the request message identification responded by the group members can be reflected from the request message identification.

In any above technical scheme, preferably, the identification generation unit 102 is used for expanding the display of the request message identification or changing the color display of the request message identification along with the increase of the response operations.

If the response operations are increased, it shows that the request message is relatively hot or is a topic of common interest, and the display of the request message identification can be expanded or the base color of the identification can be changed to indicate the change of the response state.

In any above technical scheme, preferably, the terminal may further include: a configuration unit 106, for receiving setting data of display time limit of the request message identification; and the identification generation unit 102 is further used for controlling the display of the request message identification within the display time limit according to the setting data.

When there are many requesters, a plurality of request message identifications may be displayed; as time goes on, more request message identifications may be displayed in the page of the social networking service group; however, the display page is limited; and in order that the display interface is relatively concise, the display time limit of each request message identification may be set, and the request message identification will not be displayed after the display time limit.

In any above technical scheme, preferably, the identification generation unit 102 includes a display control subunit 1022, used for, when the request sent out by any group member is the one aiming at a specified group member, if the received response operation is the one of the specified group member, or when the request sent out by any group member is a questioning request, if the received response message is the correct answer to the questioning request, canceling the display of the request message identification.

Setting the display time limit of the request message identification is a mode, besides, the display of the request message identification can also be canceled in other modes, e.g. for the request aiming at the specified group member, if the specified group member has responded to the request message identification, the request message identification does not need to be displayed again. If the request is a questioning request and the questioning request is accurately answered, the request message identification does not need to be displayed likewise, and the display of these request message identifications which do not need to be displayed can be canceled.

In any above technical scheme, preferably, the identification generation unit 102 is further used for, when a plurality of group members send out requests, controlling the display unit to display the request message identifications generated on the basis of the requests of the plurality of group members according to the authority priorities of the group members.

When there are many requests, the request message identifications can be displayed according to the priorities of the group members sending out the requests, e.g. the request message identification corresponding to the request sent out by the group member with a high priority is displayed at the foremost end or the leftmost end; or during displaying, the request message identifications of different colors are displayed according to the sequence of the priorities, namely each request message identification is displayed according to the color sequence, e.g. the identification corresponding to the highest priority is red in color, and the identification corresponding to the higher priority is pink in color.

In any above technical scheme, preferably, the identification generation unit 102 is further used for, when a plurality of group members send out requests, controlling the display unit to display the request message identifications generated on the basis of the requests of the plurality of group members according to the number of response operations performed by other group members on each request message identification.

The request message identifications can be displayed according to the number of response operations performed by each group member on the request message identifications besides according to the priorities of the group members. For example, the request message identification with a large response operation number is displayed at the foremost end or displayed with largest area.

In any above technical scheme, preferably, the terminal may further include a calculation unit 108, used for counting the total number of response operations performed by each group member on all the request message identifications and determining the priority of each group member according to the total number of response operations. The priority of the group member can be set by the group master or determined according to the joining time, or determined according to the response degree of the group member to the request message, e.g. the total response number of each group member to the request message within three months is counted; if the total response number is relatively large, the group member is considered to be relatively active, the priority is highest, and the priority of the request sent out by the group member is also highest.

In any above technical scheme, preferably, the identification generation unit is further used for controlling the display unit to display the request message identification at the top end of the page of the social networking service group.

In any above technical scheme, preferably, the request message identification includes a pattern added with character information, and the pattern includes at least one of a bubble shape, a water drop shape and a balloon shape.

Fig. 2 shows a flow diagram of an information interaction method according to an embodiment of the present invention.

As shown in Fig. 2, the information interaction method according to the embodiment of the present invention may include the following steps: step 202, when receiving a request sent out by any group member of a social networking service group, generating a request message identification and displaying the request message identification at a preset position of a page of the social networking service group; and step 204, receiving a response operation performed by another group member on the request message identification, and notifying any group member of a response message.

In this technical scheme, when the group member sends out a request, a request message identification with a prompt effect can be generated according to the request, so that another group member or a specific group member can see the request sent out by the group member. In order that all group members can obviously notice the request message identification, the request message identification can be displayed at a conspicuous position of a page of the social networking service group, other group members can reply or perform other operations on the request message identification, e.g. top-up; and when the other group members respond to the request message identification, the response can be fed back to the requester. In such an interaction mode, no matter how many pieces of messages are replied to the request, the request message identification is not flooded, thus solving the problem that information communication is not timely because the message sent out by the requester in the social networking service group is flooded at present.

In the above technical scheme, preferably, the display of the request message identification is dynamically changed according to the number of response operations of the other group members.

The display state of the request message identification is changeable, and the display of the request message identification can be changed according to the response of the other group members to the request message identification, so that the response state of the request message identification responded by the group members can be reflected from the request message identification.

In any above technical scheme, preferably, the display of the request message identification is expanded or the color display of the request message identification is changed along with the increase of the response operations. If the response operations are increased, it shows that the request message is relatively hot or is a topic of common interest, and the display of the request message identification can be expanded or the base color of the identification can be changed to indicate the change of the response state.

In any above technical scheme, preferably, setting data of display time limit of the request message identification is received; and the display of the request message identification within the display time limit is controlled according to the setting data.

When there are many requesters, a plurality of request message identifications may be displayed; as time goes on, more request message identifications may be displayed in the page of the social networking service group; however, the display page is limited; and in order that the display interface is relatively concise, the display time limit of each request message identification may be set, and the request message identification will not be displayed after the display time limit.

In any above technical scheme, preferably, when the request sent out by any group member is the one aiming at a specified group member, if the received response operation is the one of the specified group member, the display of the request message identification is canceled; or when the request sent out by any group member is a questioning request, if the received response message is the correct answer to the questioning request, the display of the request message identification is canceled.

Setting the display time limit of the request message identification is a mode, besides, the display of the request message identification can also be canceled in other modes, e.g. for the request aiming at the specified group member, if the specified group member has responded to the request message identification, the request message identification does not need to be displayed again. If the request is a questioning request and the questioning request is accurately answered, the request message identification does not need to be displayed likewise, and the display of these request message identifications which do not need to be displayed can be canceled.

In any above technical scheme, preferably, when a plurality of group members send out requests, the request message identifications generated on the basis of the requests of the plurality of group members are displayed according to the authority priorities of the group members.

When there are many requests, the request message identifications can be displayed according to the priorities of the group members sending out the requests, e.g. the request message identification corresponding to the request sent out by the group member with a high priority is displayed at the foremost end or the leftmost end; or during displaying, the request message identifications of different colors are displayed according to the sequence of the priorities, namely each request message identification is displayed according to the color sequence, e.g. the identification corresponding to the highest priority is red in color, and the identification corresponding to the higher priority is pink in color.

In any above technical scheme, preferably, when a plurality of group members send out requests, the request message identifications generated on the basis of the requests of the plurality of group members are displayed according to the number of response operations performed by other group members on each request message identification.

The request message identifications can be displayed according to the number of response operations performed by each group member on the request message identifications besides according to the priorities of the group members. For example, the request message identification with a large response operation number is displayed at the foremost end or displayed with largest area.

In any above technical scheme, preferably, the total number of response operations performed by each group member on all the request message identifications is calculated, and the priority of each group member is determined according to the total number of response operations. The priority of the group member can be set by the group master or determined according to the joining time, or determined according to the response degree of the group member to the request message, e.g. the total response number of each group member to the request message within three months is counted; if the total response number is relatively large, the group member is considered to be relatively active, the priority is highest, and the priority of the request sent out by the group member is also highest.

In any above technical scheme, preferably, the request message identification is displayed at the top end of the page of the social networking service group.

In any above technical scheme, preferably, the request message identification includes a pattern added with character information, and the pattern includes at least one of a bubble shape, a water drop shape and a balloon shape.

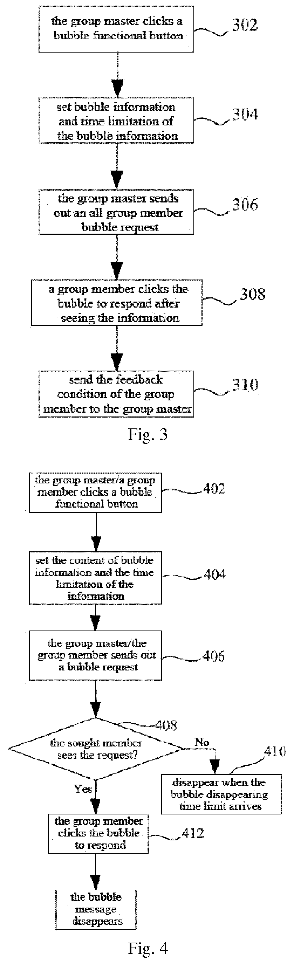

The information interaction processing process according to the present invention will be further described below in combination with Fig. 3 to Fig. 8.

Fig. 3 shows an information interaction processing flow that the group master requires group members to bubble. The group master of the social networking service group has the authority of requiring all group members to bubble. The group master and other group members have the authority of calling another member (namely requiring a certain member of the group to bubble) or sending out a help seeking bubble request (e.g. consulting how a certain problem is solved).

In step 302, the group master clicks an all bubble icon.

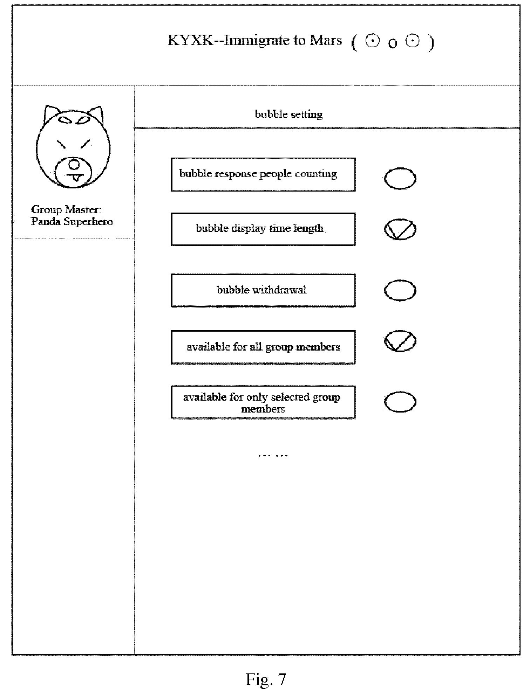

In step 304, for the content of bubble information to be generated and the display time limit, e.g. the bubble message is available within 24 hours and automatically disappears after 24 hours, as shown in Fig. 7 which is a setting interface of a request message identification, options can be set, e.g. whether the number of people responding to a bubble is counted, bubble display time length, bubble withdrawal, available for all group members (all group members can see the bubble and the replies to the bubble), available only for selected group members (only the selected group members can see the bubble and the replies to the bubble), etc. In this embodiment, the group master sets two options, namely the bubble display time length and available for all group members.

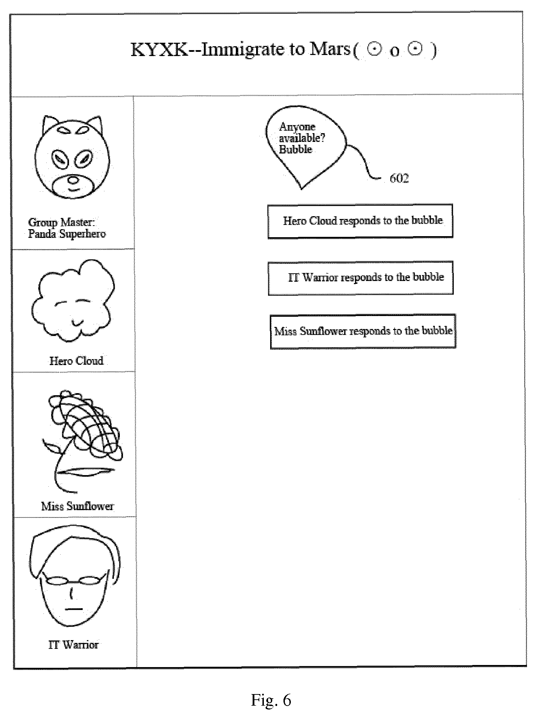

In step 306, after setting, the group master sends out an all group member bubble request, a bubble message pops up at a conspicuous position of the interface of the social networking service group (e.g. the bubble message is suspended at the top end for displaying all the time), the group master requires bubbling, and everyone should positively respond. 602 in Fig. 6 shows the request message identification generated according to the request of the group master, and the request message identification is displayed in a bubble form in this embodiment and can also be displayed in a water drop form or a balloon form.

In step 308, the bubble message can be clicked, and other members can click the bubble message and respond to the bubble request of the group master when seeing the bubble message.

In step 310, the bubble message of each group member is sent to the group master.

The group master can quickly learn the condition of the group members according to the response of the group members to the bubble request; the bubble message is displayed at the top end of a page of the social networking service group all the time along with the increase of replied information, and will not be flooded by the replied information, so that effective interaction of the information is realized; and after 24 hours, the bubble message automatically fails, so as not to occupy the page of the social networking service group.

It should be noted that, along with the increase of clicks of the bubble message, the bubble message is gradually expanded, which intuitively indicates that the concern degree of the request message is relatively high.

Fig. 4 shows an information interaction processing process that a group member sends out a bubble request of seeking a certain group member. As shown in Fig. 4, in step 402, a group member clicks a bubble functional button likewise. In step 404, the content of a bubble message to be displayed and the time limitation of the bubble message are set. In step 406, the group member sends out a bubble request, a request message identification is generated according to the bubble request, as shown by 602 in Fig. 6, and the request message identification is displayed at a conspicuous position of a page of a social networking service group.

In step 408, whether the selected member sees the request to respond is judged. In step 412, when the selected group member clicks the bubble request to respond, the bubble message disappears; the display of the bubble message may be withdrawn when the requester sees the response of the sought group member; or the display of the bubble message may be automatically withdrawn when the ID of the sought group member is identified from the response information.

In step 410, if the sought group member does not respond to the bubble message, the display of the bubble message is canceled after the set display time limit. When the sought group member does not respond to the bubble message, other group members can perform response operations on the bubble message, and the shape of the request message identification is changed along with the increase of the response operations, e.g. the bubble becomes larger, or the color becomes darker, so that the influence of the bubble message can be improved.

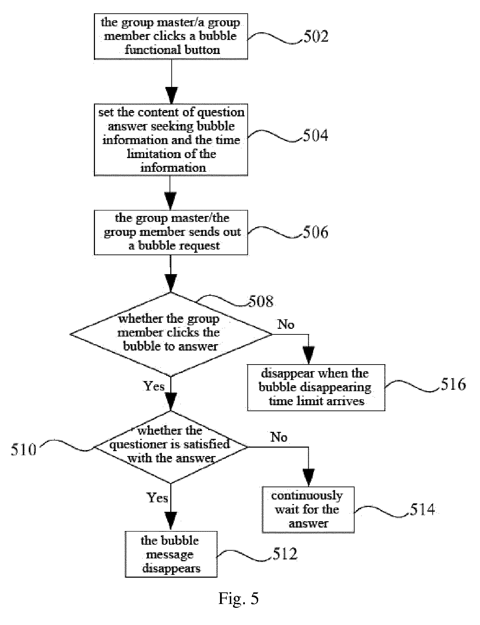

Fig. 5 shows an information interaction processing process that a group member sends out a bubble request of questioning. As shown in Fig. 5, in step 502, the group member clicks a bubble functional button. In step 504, the content of question answer seeking bubble information and the time limitation of the bubble message are set. In step 506, the group member sends out a bubble request after setting. In step 508, whether another group member performs a response operation on the bubble message is judged. If so, step 510 is carried out, to judge whether the questioner is satisfied with the response operation. Otherwise, step 516 is carried out, namely the display of the bubble message is canceled after the set bubble time limit. If the answer of the group member is the satisfactory answer for the questioner, step 512 is carried out, namely the bubble message disappears. If the answer of the group member is not the satisfactory answer for the questioner, step 514 is carried out, to continuously wait for the answer of other group member. Similarly, if the answer of the group member is still not the satisfactory answer for the questioner, the group member can perform a response operation on the bubble message, and the request message identification is also changed along with the increase of the response operations of the bubble message, e.g. the bubble becomes larger or the color becomes darker.

As shown in Fig. 6, the group master sends out an online group member bubble request, a request message identification 602 is generated according to the request, and the request message identification 602 is displayed in a bubble form in the figure and can also be displayed in a water drop form and other shapes. The group members click the bubble to respond. If a group member clicks the bubble, a message "AA responds to the bubble" is automatically generated in the group.

The group master clicks the request message identification 602, and can see the replies of the group members to the request message identification 602, as shown in Fig. 6, Hero Cloud, IT Warrior and Miss Sunflower respond to the request message identification 602. If the bubble message sent by the group master aims at a certain member, only the member can see the bubble message of the group master (equivalent to a single conversation form).

Fig. 7 shows a bubble setting interface when the group master "Panda Superhero" sends out a request. After "bubble response people counting" is set, group members responding to the bubble can be counted, to clearly learn the response condition of the group members to the bubble message. When the set "bubble display time length" does not arrive, the display of the bubble message can be canceled by the setting of "bubble withdrawal". By setting "available for only selected group members", only the selected group members can see the bubble message sent out and/or the replied content specific to the bubble message. When the option "available for only selected group members" is clicked, a list of all group members can pop up, the requester can select the group members in the list, then the selected group members can see the bubble message sent out by the requester, and others can not see the bubble message, so that the privacy of certain information can be protected, and small discussion groups are further formed in the social networking service group to meet multiple requirements of users and achieve a better and more effective information interaction effect.

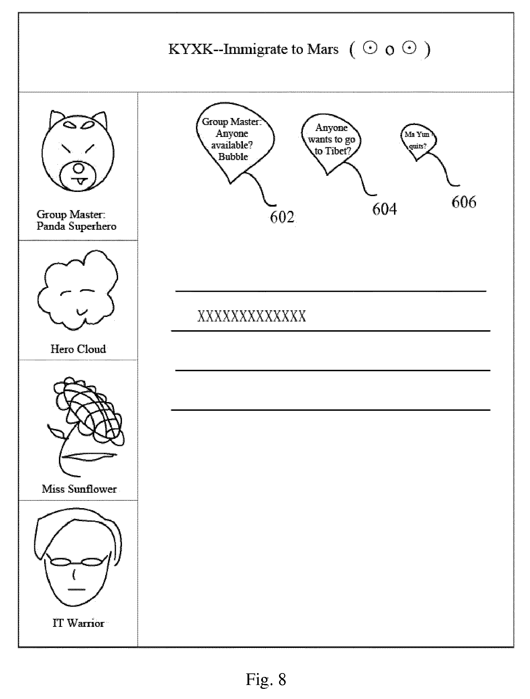

When a plurality of group members send out bubble requests, each bubble message can be displayed according to the priorities of the plurality of group members. As shown in Fig. 8, the request message identifications 602, 604 and 606 are respectively bubble requests sent out by the group master Panda Superhero, IT Warrior and Miss Sunflower. The priority of the group master Panda Superhero is highest, the priority of the IT Warrior comes second, the priority of Miss Sunflower is lowest, then when these request message identifications are displayed, the three bubble messages are displayed according to the priorities of the three group members, and the bubble message of the group master Panda Superhero is largest, so that the bubble messages can be distinguished.

The priorities of different group members can be distinguished by colors besides the shape and size of bubbles, e.g. the bubble message sent out by the group master Panda Superhero is red in color, the bubble message sent out by the IT Warrior is pink in color, and the bubble message sent out by Miss Sunflower is yellow in color.

In addition, in this embodiment, the number of response operations of each group member can be counted, the priority of each group member in the group is determined according to the counted number of response operations of each group member, the activity of the group members can be reflected by the number of response operations, and the higher the activity is, the higher the priority is. The bubble message sent out by the group member with a high priority can arouse more concern from other group members, namely the request message identification generated according to the request sent out by the group member with a high priority will be displayed at the relatively conspicuous position and with largest display area and darkest color.

Besides the above mode of determining the priority of each group member, the group master can set the corresponding priority for each group member.

The display area of a page of the social networking service group is limited. When there are many request message identifications, the bubble message sent out by the requester with a higher priority can be preferentially displayed, the bubble message sent out by the requester with a lower priority is concealed, and the concealed bubble message can be displayed by clicking the option "more".

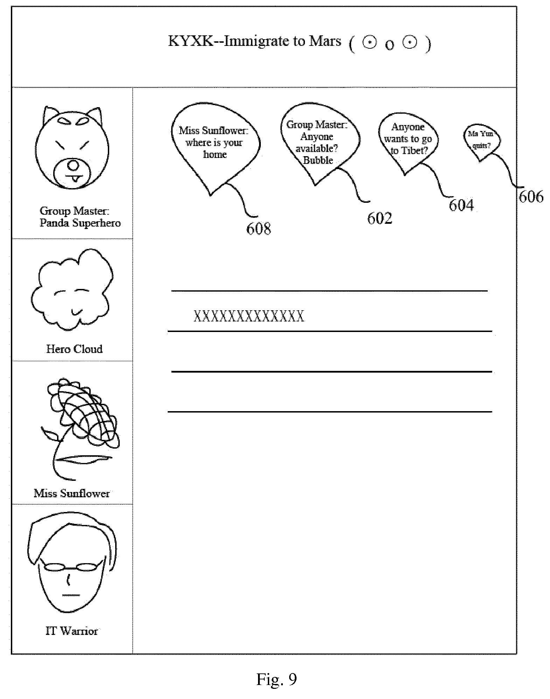

As shown in Fig. 9, it is supposed that the group master sends out a question request to Miss Sunflower and defines that only Miss Sunflower can see the question request, the bubble message 608 sent out by the group master can also be displayed on the page of the social networking service group of Miss Sunflower besides the message "Anyone available? Bubble" 602, the message "Anyone wants to go to Tibet?" 604 and the message "Ma Yun quits?" 606, Miss Sunflower can perform a response operation on the bubble message 608, and only the group master can see the replied information.

The technical schemes of the present invention are described in detail above in combination with the accompanying drawings. When the group member of the social networking service group sends out a request, the request message identification can be displayed at the conspicuous position of the page of the social networking service group and can be displayed in different forms other group member can perform a response operation on the request message identification and feed back the response message to the requester at the same time, and the display of the request message identification can be canceled only under specific conditions (the display time limit arrives or the display is withdrawn) and can not be flooded due to the increase of replied messages, so that the request message can be concerned all the time and the group members can perform effective and rapid information interaction.

The above descriptions are merely preferred embodiments of the present invention, and the present invention is not limited thereto. Various modifications and changes can be made to the present invention for those skilled in the art. Any modification, equivalent substitution, change and the like made within the spirit and principle of the present invention should be included in the protection scope of the present invention.

## Claims

1. A terminal, comprising:
an identification generation unit, for generating a request message identification when receiving a request sent out by any group member of a social networking service group, and controlling a display unit of the terminal to display the request message identification at a preset position of a page of the social networking service group; and
a notification unit, for receiving a response operation performed by another group member on the request message identification, and notifying the any group member of a response message.

2. The terminal of claim 1, wherein the identification generation unit is further used for dynamically changing the display of the request message identification according to the number of response operations of the other group members.

3. The terminal of claim 2, wherein the identification generation unit is used for expanding the display of the request message identification or changing the color display of the request message identification along with the increase of the response operations.

4. The terminal of claim 1, further comprising:
a configuration unit, for receiving setting data of display time limit of the request message identification;
wherein the identification generation unit is further used for controlling the display of the request message identification within the display time limit according to the setting data.

5. The terminal of claim 1, wherein the identification generation unit comprises a display control subunit, used for, when the request sent out by the any group member is the one aiming at a specified group member, if the received response operation is the one of the specified group member, or when the request sent out by the any group member is a questioning request, if the received response message is the correct answer to the questioning request, canceling the display of the request message identification.

6. The terminal of claim 1, wherein the identification generation unit is further used for, when a plurality of group members send out requests, controlling the display unit to display the request message identifications generated on the basis of the requests of the plurality of group members according to the authority priorities of the group members.

7. The terminal of claim 1, wherein the identification generation unit is further used for, when a plurality of group members send out requests, controlling the display unit to display the request message identifications generated on the basis of the requests of the plurality of group members according to the number of response operations performed by other group members on each request message identification.

8. The terminal of claim 6, further comprising: a calculation unit, used for counting the total number of response operations performed by each group member on all the request message identifications and determining the priority of each group member according to the total number of response operations.

9. The terminal of claim 1, wherein the identification generation unit is further used for controlling the display unit to display the request message identification at the top end of the page of the social networking service group.

10. The terminal of any of claims 1 to 9, wherein the request message identification comprises a pattern added with character information, and the pattern is displayed in a bubble shape.

11. An information interaction method, comprising:
when receiving a request sent out by any group member of a social networking service group, generating a request message identification and displaying the request message identification at a preset position of a page of the social networking service group; and
receiving a response operation performed by another group member on the request message identification, and notifying the any group member of a response message.

12. The information interaction method of claim 11, wherein the display of the request message identification is dynamically changed according to the number of response operations of the other group members.

13. The information interaction method of claim 12, wherein the display of the request message identification is expanded or the color display of the request message identification is changed along with the increase of the response operations.

14. The information interaction method of claim 11, wherein setting data of display time limit of the request message identification is received; and
the display of the request message identification within the display time limit is controlled according to the setting data.

15. The information interaction method of claim 11, wherein when the request sent out by the any group member is the one aiming at a specified group member, if the received response operation is the one of the specified group member, the display of the request message identification is canceled; or
when the request sent out by the any group member is a questioning request, if the received response message is the correct answer to the questioning request, the display of the request message identification is canceled.

16. The information interaction method of claim 11, wherein when a plurality of group members send out requests, the request message identifications generated on the basis of the requests of the plurality of group members are displayed according to the authority priorities of the group members.

17. The information interaction method of claim 11, wherein when a plurality of group members send out requests, the request message identifications generated on the basis of the requests of the plurality of group members are displayed according to the number of response operations performed by other group members on each request message identification.

18. The information interaction method of claim 13, wherein the total number of response operations performed by each group member on all the request message identifications is counted, and the priority of each group member is determined according to the total number of response operations.

19. The information interaction method of claim 11, wherein the request message identification is displayed at the top end of the page of the social networking service group.

20. The information interaction method of any of claims 11 to 19, wherein the request message identification comprises a pattern added with character information, and the pattern is displayed in a bubble shape.
